# EUROPÄISCHE PATENTSCHRIFT

(11) **EP 1 683 394 B1**
(45) Veröffentlichungstag und Bekanntmachung des Hinweises auf die Patenterteilung: **04.04.2007**
(21) Anmeldenummer: 04791288.6
(22) Anmeldetag: 22.10.2004
(51) Int. Cl.: H05B 6/36, H05B 6/12

(54) **INDUKTOR MIT EINER ZU EINER SPIRALFÖRMIGEN INDUKTIONSSPULE AUFGEROLLTEN LITZE**
INDUCTOR COMPRISING A LITZ WIRE THAT IS ROLLED UP SO AS TO FORM A SPIRAL-SHAPED INDUCTION COIL
INDUCTEUR COMPRENANT UN TORON ENROULE SOUS FORME DE BOBINE D'INDUCTION EN SPIRALE

(30) Priorität: 30.10.2003 ES 200302576 P
(43) Veröffentlichungstag der Anmeldung: 26.07.2006
(73) Patentinhaber: BSH Bosch und Siemens Hausgeräte GmbH, 81739 München (DE)
(72) Erfinder: HERNANDEZ BLASCO, Pablo, E-50017 Zaragoza (ES); PINA GADEA, Carmelo, E-50008 Zaragoza (ES)
(86) Internationale Anmeldenummer: PCT/EP2004/052627
(87) Internationale Veröffentlichungsnummer: WO 2005/043960

(56) Entgegenhaltungen:
- EP-A- 0 565 186
- WO-A-95/22239
- WO-A-97/20451
- US-A- 3 781 503
- US-A- 4 029 926

## Beschreibung

Die vorliegende Erfindung betrifft einen Induktor mit einer zu einer spiralförmigen Induktionsspule aufgerollten Litze, die eine Anzahl von miteinander verdrillten, elektrisch leitfähigen Drähten aufweist.

Ein derartiger Induktor ist aus US 5,686,006 bekannt. Dort ist ein Induktionskochfeld mit einem Induktor beschrieben, der eine geteilte, zu einer spiralförmigen Induktionsspule aufgerollte Litze aus elektrisch leitfähigen Drähten enthält, wobei die Litze einen runden Strang bildet. Der Induktor umfasst einen Spulenträger aus thermisch leitfähigem und elektrisch isolierendem Material, um einen Wärmeabfluss von der Induktionsspule über den Spulenträger zu ermöglichen.

Der Nachteil des in US 5,686,006 vorgeschlagenen Induktors besteht darin, dass insbesondere Induktoren mit geringem Durchmesser aufgrund einer geringen Querschnittsfläche der Litze eine geringe Induktivität aufweisen und somit außerhalb der Resonanzfrequenz arbeiten, wodurch der Wirkungsgrad reduziert ist.

Der Erfindung liegt die Aufgabe zugrunde, einen kostengünstigen Induktor für ein Induktionsgargerät, insbesondere Kochfeld, mit hohem Wirkungsgrad zur Verfügung zu stellen.

Diese Aufgabe wird durch einen Induktor mit den Merkmalen von Anspruch 1 gelöst.

Bei dem Induktor mit einer zu einer spiralförmigen Induktionsspule aufgerollten Litze, die eine Anzahl von miteinander verdrillten, elektrisch leitfähigen Drähten aufweist, ist die Litze als ein flaches Band ausgebildet.

Es ist vorteilhaft, wenn der Induktor eine maximale Induktionsheizleistung zur Verfügung stellt, die proportional zu seinem Durchmesser ist. D.h. Induktoren mit einem kleinen Durchmesser, beispielsweise zur Erwärmung kleiner Gargefäße, sollten eine geringere maximale Induktionsheizleistung zur Verfügung stellen als Induktoren mit einem größeren Durchmesser, um eine Überhitzung der Gargefäße zu vermeiden. Eine Verringerung der Induktionsheizleistung kann durch eine Erhöhung der Windungsdichte der Induktionsspule erzielt werden. Durch die Ausbildung der Litze als flaches Band kann die Induktionsspule dichter gewickelt werden, als mit einer als runder Strang ausgebildeten Litze. Dadurch kann bei gleicher Stromdichte durch die Litze die maximale Induktionsheizleistung reduziert und die Induktivität der Induktionsspule erhöht werden. Dies hat den Vorteil, dass auch für eine Litze mit kleiner Querschnittsfläche die Induktionsspule mit ihrem zugehörigen Wechselrichter nahe bei dessen Resonanzfrequenz betrieben und somit ein hoher Wirkungsgrad erzielt werden kann. Des weiteren wird bei gleicher Induktionsheizleistung ein geringerer Strom und damit ein geringerer magnetischer Fluss benötigt, was zu einer reduzierten elektromagnetischen Strahlung führt. Durch die miteinander verdrillten, elektrisch leitfähigen Drähte tritt bei der Induktionsspule ein geringerer Skin-Effekt auf als bei einer Induktionsspule, die aus Vollmaterial, wie beispielsweise einem Bandleiter besteht oder aus Drähten, die nicht miteinander verdrillt sind. Der geringere Skin-Effekt führt zu einem geringerer Leistungsverlust in den Drähten und somit zu einer geringeren Erwärmung der Induktionsspule.

Die Dicke und Breite des Bandes sind durch die Anzahl und den Durchmesser der Litzendrähte begrenzt. Insbesondere weist das Band eine minimale Dicke von der Summe der Durchmesser zweier Drähte auf. Auf diese Weise sind in der Litze zumindest zwei Drähte miteinander verdrillt.

Gemäß einer bevorzugten Ausführungsform ist vorgesehen, dass zwischen Dicke und Breite des Bandes ein Verhältnis in einer Größenordnung von eins zu zwei besteht. Auf diese Weise ist bei einer Herstellung des Bandes gewährleistet, dass die einzelnen Drähte der Litze nicht verformt werden.

In der Induktionsspule ist insbesondere die Litze derart aufgerollt, dass sich in der Induktionsspule je zwei Windungen des Bandes mit ihrer Breitseite gegenüberstehen. Auf diese Weise kann eine besonders hohe Windungsdichte erzielt werden.

Gemäß einer bevorzugten Ausführungsform ist vorgesehen, dass die Induktionsspule in einem Spulenträger angeordnet ist Insbesondere weist der Spulenträger eine spiralförmige Nut zur Aufnahme der Induktionsspule auf. Durch die Nut kann die Induktionsspule auf einfache Weise fixiert werden, so dass sie ihre Form beibehält.

Vorteilhafterweise ist die Nut an die Dicke und die Breite des Bandes angepasst, so dass das Band ohne Verformung in die Nut eingefügt werden kann. Insbesondere ist die Breite des Bandes geringfügig größer als die Tiefe der Nut. Somit ragt das in die Nut eingefügte Band über die Nut hinaus und kann auf einfache Weise, z.B. mit Hilfe von über das Band und den Spulenträger geklebten Klebestreifen fixiert werden.

Gemäß einer bevorzugten Ausführungsform ist vorgesehen, dass der Induktor zumindest zwei zu Induktionsspulen aufgerollte Litzen aufweist, wobei die Litzen verschiedene Dicken und/oder verschiedene Breiten aufweisen. Insbesondere weisen die Induktionsspulen unterschiedliche Windungsdichten auf. Dies hat den Vorteil, dass bei dem Induktor zwei Heizzonen zur Verfügung stehen, deren maximale Induktionsheizleistung verschiedenen sein kann.

Bei einem Verfahren zur Herstellung der Litze, die eine Anzahl von miteinander verdrillten, elektrisch leitfähigen Drähten aufweist, wird die Litze aus einem runden Strang der Drähte hergestellt, indem der runde Strang zu einem flachen Band umgeformt wird. Insbesondere wird der runde Strang durch Pressen und/oder Walzen zu einem flachen Band umgeformt. Auf diese Weise ist die Herstellung der Litze besonders kostengünstig und flexibel, da aus dem runden Strang Litzen mit verschiedener Dicke hergestellt werden können.

Insbesondere betrifft die Erfindung ein Induktionsgargerät, insbesondere Induktionskochfeld, mit zumindest einem Induktor.

Die Erfindung und ihre Weiterbildungen werden nachfolgend anhand von Zeichnungen näher erläutert:

Es zeigen

Fig.1 eine schematische Darstellung eines Induktionskochfeldes mit einer Steuerung zur Regelung der Induktionsheizleistung,

Fig.2 eine Systemskizze der Steuerung,

Fig.3 einen schematischen Aufbau eines Induktors,

Fig.4 eine Ansicht des Induktionskochfelds von oben mit unterschiedlich geformten Induktionskochzonen,

Fig.5 einen Querschnitt durch eine erfindungsgemäße Induktionsspule des Induktionskochfeldcs, und

Fig.6 eine Vorrichtung zur Herstellung einer erfindungsgemäßen Litze.

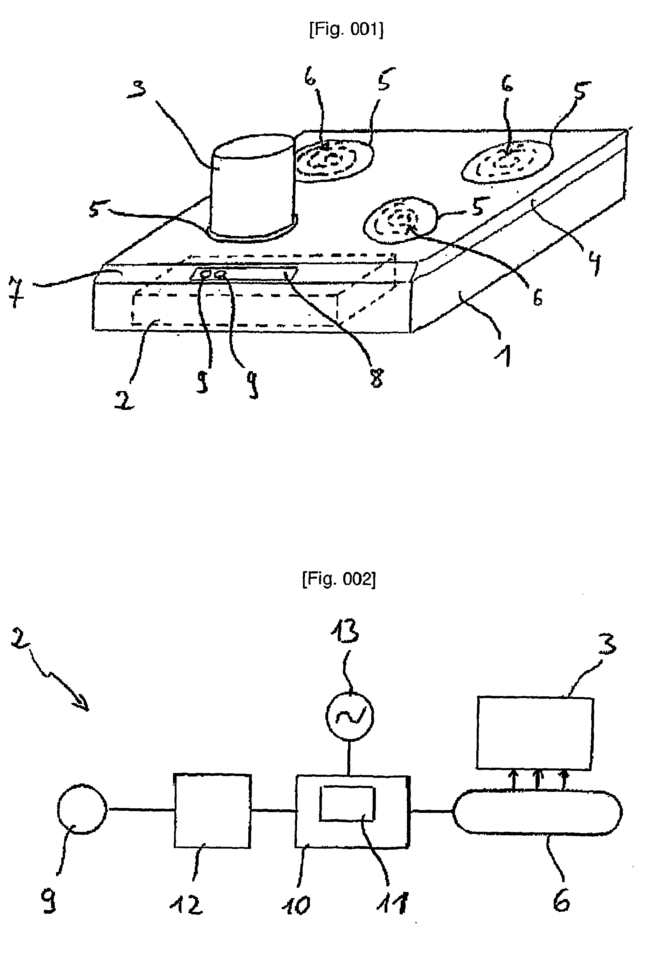

In Figur 1 ist ein Induktionskochfeld 1 mit einer Steuerung 2 zur Regelung einer Induktionsheizleistung und damit zur Temperaturregelung eines Gargefäßes 3 gezeigt. Das Induktionskochfeld 1 weist eine Glaskeramikplatte 4 mit vier Induktionskochzonen 5 auf, an deren Position sich unter der Glaskeramikplatte je ein Induktor 6 befindet. Das Gargefäß 3 wird durch einen der Induktoren 6 beheizt. Zur Einstellung der Induktionsheizleisung der Induktoren 6 ist an einer Front 7 der Glaskeramikplatte eine Eingabeeinheit 8 angeordnet, die Eingabeelemente 9 zur Einstellung der Induktionsheizleistung aufweist.

Wie in Figur 2 gezeigt, umfasst die Steuerung 2 den Induktor 6 zur induktiven Erwärmung eines Heizelementes 3, wie beispielsweise des Gargefäßes 3 in Figur 1, einen Leistungsregler 10 zur Regelung einer dem Induktor 6 zugeführten elektrischen Leistung mit einem Wechselrichter 11, ein Eingabeelement 9 zur Einstellung der dem Induktor 6 zugeführten elektrischen Leistung und somit der Induktionsheizleistung und eine Steuereinheit 12, wie z.B. einen Mikroprozessor, zur Steuerung des Leistungsreglers 10. Die Steuerung 2 wird von einer Spannungsquelle 13 mit einer Eingangsspannung versorgt, die eine Wechselspannung ist. Der Wechselrichter 11 des Leistungsreglers 10 wandelt die Eingangsspannung mit einer Eingangsfrequenz von beispielsweise 50 Hz in eine Ausgangsspannung um, die in einem höheren Frequenzbereich liegt, z.B. über 25 kHz.

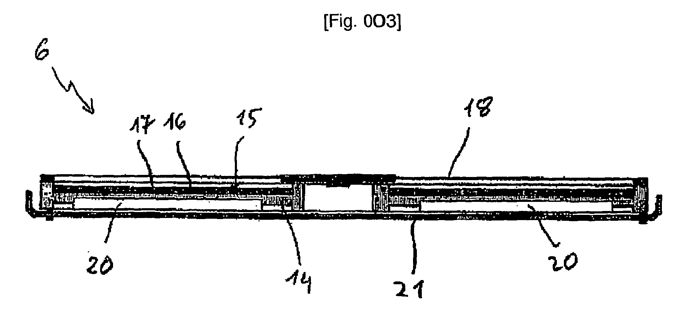

In Figur 3 ist ein schematischer Aufbau des Induktors 6 gezeigt. Der Induktor 6 setzt sich zusammen aus einem Spulenträger 14, der beispielsweise aus Kunststoff gefertigt ist und an dessen Oberseite 15 eine spiralförmige Nut 16 eingeprägt ist. In die Nut 16 ist eine Induktionsspule 17 eingefügt. Die Induktionsspule 17 ist durch eine Isolationsschicht 18 abgedeckt, die zur thermischen und zur elektrischen Isolation dient. In der Unterseite 19 des Spulenträgers 14 befindet sich eine Aufnahme für magnetische Rückschlussmittel 20, wie beispielsweise Ferritstäbe. Der Induktor 6 wird in dem Induktionskochfeld 1 durch einen Induktorenträger 21 gehalten und üblicherweise durch nicht dargestellte Federelemente von unten an die Glaskeramikplatte 4 gedrückt.

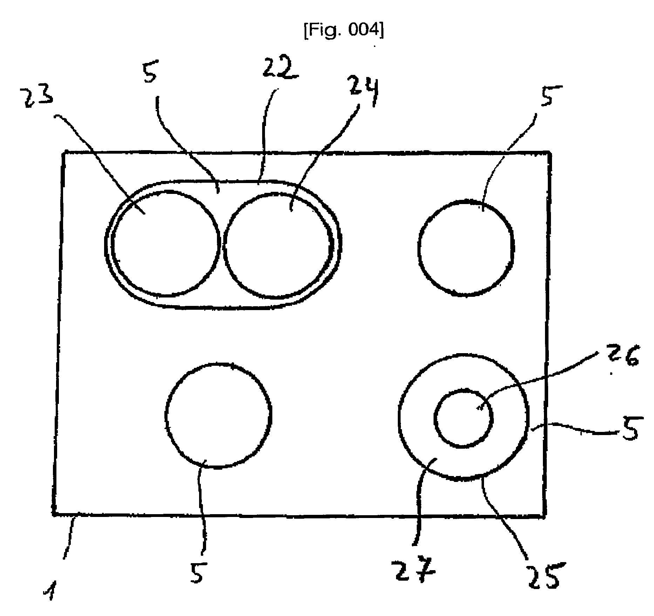

In Figur 4 ist eine Ansicht des Induktionskochfelds 1 mit unterschiedlich geformten Induktionskochzonen 5 von oben gezeigt. Eine Bräterzone 22 weist zwei nebeneinander angeordnete Induktionsspulen 23, 24 mit gleichem Durchmesser und somit gleicher Windungsdichte auf, wobei hier nur ein äußerer Umfang der Induktionsspulen 23, 24 gezeigt ist. Eine Doppelheizzone 25 weist eine innere Induktionsspule 26 mit geringem Durchmesser und um eine um die innere Induktionsspule 26 angeordnete ringförmige äußere Induktionsspule 27 auf. Mit dieser Doppelheizzone 25 können Gargefäße 3 mit unterschiedlichen Durchmessern erhitzt werden. Für Gargefäße 3 mit kleinen Durchmessern wird nur die innere Induktionsspule 26 betrieben, für Gargefäße 3 mit großem Durchmesser wird zur inneren Induktionsspule 26 die ringförmige äußere Induktionsspule 27 dazu geschaltet. Die innere Induktionsspule 26 kann eine höhere Windungsdichte aufweisen als die ringförmige äußere Induktionsspule 27. Somit kann die maximale Induktionsheizleistung der inneren Induktionsspule 26 von der maximalen Induktionsheizleistung der ringförmigen äußeren Induktionsspule 27 verschieden sein. In Figur 4 sind nur runde Induktionsspulen 23, 24, 26, 27 gezeigt. Es sind aber auch andere Formen möglich. Insbesondere kann die Bräterzone 22 aus einer einzigen Induktionsspule bestehen, die an die Form der Bräterzone 22 angepasst ist.

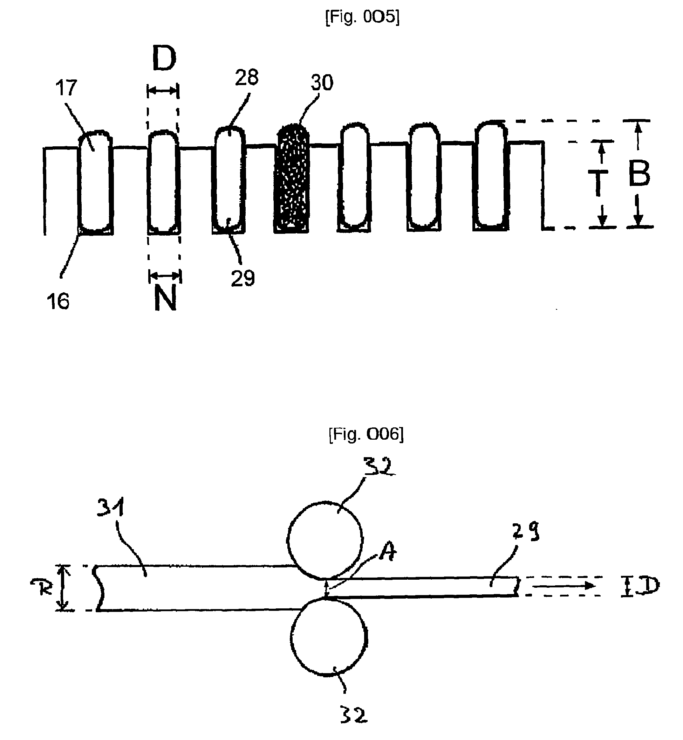

Figur 5 zeigt einen Querschnitt durch eine erfindungsgemäße Induktionsspule des Induktionskochfeldes 1. In die spiralförmige Nut 16 an der Oberseite 15 des Spulenträgers 14 ist die Induktionsspule 17 eingelegt. Die Nut 16 weist eine Tiefe T und eine Breite N auf. Die Induktionsspule 17 besteht aus einer Litze 28 und weist eine Dicke D und eine Breite B auf, wobei die Breite B größer ist als die Dicke D. Die Litze 28 ist somit als ein flaches Band 29 ausgebildet. Die Dicke D der Litze 28 ist an die Breite N der Nut 16 angepasst. Die Breite B der Litze 28 ist größer als die Tiefe T der Nut 16, so dass die Litze 28 über die Nut 16 hinausragt. Des weiteren besteht die Litze 28 aus einer Anzahl von miteinander verdrillten, elektrisch leitfähigen Drähten 30, die in Figur 5 beispielhaft in einer Windung der Litze 28 gezeigt sind.

In Figur 6 ist eine Vorrichtung zur Herstellung der Litze 28 gezeigt. Ein runder Strang 31, der die miteinander verdrillten, elektrisch leitfähigen Drähten 30 aufweist, wird in Pfeilrichtung zwischen zwei Walzen 32 hindurch geführt, wobei der Abstand A der beiden Walzen 32 geringer ist als der Durchmesser R des runden Strangs 31 und so groß wie die gewünschte Dicke D der Litze 28. Dadurch wird der runde Strang 31 zu einem flachen Band 29 umgeformt. Durch Veränderung des Abstandes A der beiden Walzen 32 können aus dem runden Strang 31 Litzen 28 mit verschiedenen Dicken D hergestellt werden.

### Bezugszeichenliste

1 Induktionskochfeld
2 Steuerung
3 Gargefäß
4 Glaskeramikplatte
5 Induktionskochzone
6 Induktor
7 Front der Glaskeramikplatte
8 Eingabeeinheit
9 Eingabeelement
10 Leistungsregler
11 Wechselrichter
12 Steuereinheit
13 Spannungsquelle
14 Spulenträger
15 Oberseite des Spulenträgers
16 Spiralförmige Nut
17 Induktionsspule
18 Isolationsschicht
19 Unterseite des Spulenträgers
20 Magnetische Rückschlussmittel
21 Induktorenträger
22 Bräterzone
23 Induktionsspule der Bräterzone
24 Induktionsspule der Bräterzone
25 Doppelheizzone
26 Innere Induktionsspule der Doppelheizzone
27 Ringförmige äußere Induktionsspule der Doppelheizzone
28 Litze
29 Flaches Band
30 Miteinander verdrillte, elektrisch leitfähige Drähte
31 Runder Strang
32 Walzen
A Abstand der Walzen
B Breite der Litze
D Dicke der Litze
N Breite der Nut
T Tiefe der Nut

## Patentansprüche

1. Induktor mit einer zu einer spiralförmigen Induktionsspule (17) aufgerollten Litze (28), die eine Anzahl von miteinander verdrillten, elektrisch leitfähigen Drähten (30) aufweist, **dadurch gekennzeichnet, dass** die Litze (28) als ein flaches Band (29) ausgebildet ist.

2. Induktor nach Anspruch 1, **dadurch gekennzeichnet, dass** das Band (28, 29) eine minimale Dicke (D) von der Summe der Durchmesser zweier Drähte aufweist.

3. Induktor nach einem der Ansprüche 1 oder 2, **dadurch gekennzeichnet, dass** zwischen Dicke (D) und Breite (B) des Bandes (28, 29) ein Verhältnis in einer Größenordnung von eins zu zwei besteht.

4. Induktor nach einem der Ansprüche 1 bis 3, **dadurch gekennzeichnet, dass** sich in der Induktionsspule je zwei Windungen des Bandes (28, 29) mit ihrer Breitseite gegenüberstehen.

5. Induktor nach einem der Ansprüche 1 bis 4, **dadurch gekennzeichnet, dass** die Induktionsspule (17) in einem Spulenträger (14) angeordnet ist.

6. Induktor nach Anspruch 5, **dadurch gekennzeichnet, dass** der Spulenträger (14) eine spiralförmige Nut (16) zur Aufnahme der Induktionsspule (17) aufweist.

7. Induktor nach Anspruch 6, **dadurch gekennzeichnet, dass** die Nut (16) an die Dicke (D) und die Breite (B) des Bandes (28, 29) angepasst ist.

8. Induktor nach Anspruch 6 oder 7, **dadurch gekennzeichnet, dass** die Breite (B) des Bandes (28, 29) geringfügig größer ist als die Tiefe (T) der Nut (16).

9. Induktor nach einem der Ansprüche 1 bis 8, **dadurch gekennzeichnet, dass** der Induktor (6) zumindest zwei zu Induktionsspulen (17) aufgerollte Litzen (28) aufweist, wobei die Litzen (28) verschiedene Dicken (D) und/oder verschiedene Breiten (B) aufweisen.

10. Induktor nach Anspruch 9, **dadurch gekennzeichnet, dass** die Induktionsspulen (17) unterschiedliche Windungsdichten aufweisen.

11. Verfahren zur Herstellung einer Litze (28), die eine Anzahl von miteinander verdrillten, elektrisch leitfähigen Drähten (30) aufweist, für einen Induktor (6) nach einem der Ansprüche 1 bis 10, **dadurch gekennzeichnet, dass** die Litze (28) aus einem runden Strang (31) der Drähte (30) hergestellt wird, indem der runde Strang (31) zu einem flachen Band (29) umgeformt wird.

12. Verfahren nach Anspruch 11, **dadurch gekennzeichnet, dass** der runde Strang (31) durch Pressen und/oder Walzen zu einem flachen Band (29) umgeformt wird.

13. Induktionsgargerät, insbesondere Induktionskochfeld (1), mit zumindest einem Induktor (6) nach einem der Ansprüche 1 bis 10.

## Claims

1. Inductor with a strand (28), which is rolled up to form a spiral induction coil (17) and which comprises a number of twisted-together, electrically conductive wires (30), **characterised in that** the strand (28) is formed as a flat strip (29).

2. Inductor according to claim 1, **characterised in that** the strip (28, 29) has a minimum thickness (D) of the sum of the diameter of two wires.

3. Inductor according to one of claims 1 and 2, **characterised in that** a ratio in an order of magnitude of one to two exists between thickness (D) and width (B) of the strip (28, 29).

4. Inductor according to one of claims 1 to 3, **characterised in that** two windings of the strip (28, 29) are disposed opposite one another by their wide side in the induction coil.

5. Inductor according to one of claims 1 to 4, **characterised in that** the induction coil (17) is arranged in a coil carrier (14).

6. Inductor according to claim 5, **characterised in that** the coil carrier (14) has a spiral groove (16) for reception of the induction coil (17).

7. Inductor according to claim 6, **characterised in that** the groove (16) is adapted to the thickness (D) and the width (B) of the strip (28, 29).

8. Inductor according to claim 6 or 7, **characterised in that** the width (B) of the strip (28, 29) is slightly larger than the depth (T) of the groove (16).

9. Inductor according to one of claims 1 to 8, **characterised in that** the inductor (6) comprises at least two strands (28) rolled up to form induction coils (17), wherein the strands (28) have different thicknesses (D) and/or different widths (B).

10. Inductor according to claim 9, **characterised in that** the induction coils (17) have different winding densities.

11. Method of producing a strand (28), which comprises a number of electrically conductive wires (30) twisted together, for an inductor (6) according to one of claims 1 to 10, **characterised in that** the strand (28) is produced from a round strand (31) of the wires (30) **in that** the round strand (31) is deformed into a flat strip (28).

12. Method according to claim 11, **characterised in that** the round strand (31) is deformed into a flat strip (29) by pressing and/or rolling.

13. Induction apparatus, particularly induction cooking field (1), with at least one inductor (6) according to one of claims 1 to 10.

## Revendications

1. Inducteur comprenant un toron (28) qui est enroulé sous forme de bobine d'induction (17) en spirale et qui présente une pluralité de fils électroconducteurs (30) torsadés les uns avec les autres, **caractérisé en ce que** le toron (28) est conçu sous forme de bande plane (29).

2. Inducteur selon la revendication 1, **caractérisé en ce que** la bande (28, 29) présente une épaisseur minimale (D) de la somme des diamètres de deux fils.

3. Inducteur selon l'une des revendications 1 ou 2, **caractérisé en ce qu'**il existe entre épaisseur (D) et largeur (B) de la bande (28, 29) un rapport dans un ordre de grandeur de un à deux.

4. Inducteur selon l'une des revendications 1 à 3, **caractérisé en ce que** dans la bobine d'induction, deux spires à chaque fois de la bande (28, 29) se font face avec leur côté large.

5. Inducteur selon l'une des revendications 1 à 4, **caractérisé en ce que** la bobine d'induction (17) est placée dans un porte-bobine (14).

6. Inducteur selon la revendication 5, **caractérisé en ce que** le porte-bobine (14) présente une rainure (16) en spirale, destinée à recevoir la bobine d'induction (17).

7. Inducteur selon la revendication 6, **caractérisé en ce que** la rainure (16) est adaptée à l'épaisseur (D) et la largeur (B) de la bande (28, 29).

8. Inducteur selon la revendication 6 ou 7, **caractérisé en ce que** la largeur (B) de la bande (28, 29) est légèrement supérieure à la profondeur (T) de la rainure (16).

9. Inducteur selon l'une des revendications 1 à 8, **caractérisé en ce que** l'inducteur (6) présente au moins deux torons (28) enroulés sous forme de bobines d'induction (17), lesdits torons (28) présentant différentes épaisseurs (D) et/ou différentes largeurs (B).

10. Inducteur selon la revendication 9, **caractérisé en ce que** les bobines d'induction (17) présentent différentes densités de spires.

11. Procédé pour la fabrication d'un toron (28) présentant une pluralité de fils électroconducteurs (30) torsadés les uns avec les autres pour un inducteur (6) selon l'une des revendications 1 à 10, **caractérisé en ce que** le toron (28) est fabriqué à partir d'un faisceau rond (31) de fils (30) en transformant ledit faisceau rond (31) en bande plane (29).

12. Procédé selon la revendication 11, **caractérisé en ce que** le faisceau rond (31) est transformé en bande plane (29) par compression et/ou laminage.

13. Appareil de cuisson à induction, en particulier table de cuisson à induction (1), comprenant au moins un inducteur (6) selon l'une des revendications 1 à 10.
